# EUROPEAN PATENT APPLICATION

(11) **EP 4 424 505 A1**
(43) Date of publication of application: **04.09.2024**
(21) Application number: 23305269.5
(22) Date of filing: 01.03.2023
(51) Int. Cl.: B32B 7/022, B32B 17/10

(54) **INTERLAYER FOR AN ACOUSTIC LAMINATED GLAZED ASSEMBLY**

(71) Applicant: Saint-Gobain Glass France, 92400 Courbevoie (FR)
(72) Inventor: CHAN, Nicky, Worcester, 01615-0137 (US); SHACKLEFORD, David, Worcester, 01615-0137 (US); TOWLE, Elizabeth, Worcester, 01615-0137 (US); LAI, Choung-Houng, Worcester, 01615-0137 (US); CEDANO SERRANO, Francisco Javier, 93303 Aubervilliers (FR)
(74) Representative: Saint-Gobain Recherche

(57) **Abstract**

The present invention relates to an interlayer for a laminated glazed assembly, the interlayer comprising two outer layers formed by a first material chosen between polyvinyl butyral (PVB) and poly (ethylene-vinyl acetate) (EVA), the interlayer also comprising a viscoelastic damping layer arranged between the two outer layers, the damping layer being formed by a second material comprising at least one acrylic polymer, at least one tackifier, and at least one plasticizer, the plasticizer(s) having a mass fraction(s) in the damping layer comprised between 0.07 and 0.43, the mass fraction of the plasticizer(s) in first material being strictly superiorto the mass fraction of the plasticizer(s) in the second material, the interlayer comprising two barrier layers, one of the barrier layers being arranged between the damping layer and one of the outer layers, the other barrier layers being arranged between the damping layer and the other outer layer, the barrier layers being configured to block a diffusion of the plasticizer.

## Description

### Technical field

The present invention relates to an interlayer comprising a viscoelastic damping layer for sound attenuation, and a method for manufacturing the interlayer thereof. In particular, the interlayer is an interlayer for a laminated glazed assembly of a vehicle.

### Background art

It is known to use laminated glazed assembly as a windshield of a vehicle. Laminated glazed assembly typically consists of two superimposed sheets of glass and an interlayer separating the two sheets of glass. It is desirable to maximize the sound attenuation of the laminated glazed assembly.

To this end, a known interlayer is a tri-layer comprising two outer layers formed of polyvinyl butyral (acronym PVB) and an inner layer, also formed of PVB. The PVB of the inner layer has a different physico-chemistry than the PVB of the two outer layers (see for example, US Patent No. 5,340,654, 5,190,826, US 2006/0210782 and US 2016/0171961). In particular, the residual hydroxyl group content of PVB of the inner layer may be lower than that of PVB of the outer layers. It can be between 8% and 10% when that of the PVB of the outer layers is between 18% and 20%. This difference in content allows, during an autoclaving of the laminated glazed assembly, to promote a diffusion of the plasticizer of the outer layers to the inner layer, which makes it possible to improve the damping properties of the inner layer while conferring mechanical stiffness properties to the outer layers. However, it remains desirable to increase the sound attenuation of a laminated glazed assembly comprising a tri-layer interlayer.

To this end, it has been considered to reduce the residual hydroxyl group content of the inner layer in view of the contents described above. However, it has been measured that such a decrease also leads to a decrease in the glass transition temperature of the PVB of the inner layer. This decrease in the glass transition temperature leads to a increase in the frequency range for which a loss factor of the interlayer is maximum, outside the frequency range useful for targeted sound attenuation in a vehicle, i.e. between 1 kHz and 10 kHz.

### Summary of the invention

An interlayer for a laminated glazed assembly has been developed to respond at least partially to the above-mentioned issues of the prior art. The interlayer comprises two outer layers formed by a first material chosen between polyvinyl butyral (PVB) and poly (ethylene-vinyl acetate) (EVA), the interlayer also comprising a viscoelastic damping layer arranged between the two outer layers, the damping layer being formed by a second material comprising:
- at least one acrylic polymer,
- at least one tackifier, and
- at least one plasticizer, the plasticizer(s) having a mass fraction(s) in the damping layer comprised between 0.07 and 0.43,

the mass fraction of the plasticizer(s) in first material being strictly superior to the mass fraction of the plasticizer(s) in the second material,
the interlayer comprising two barrier layers, one of the barrier layers being arranged between the damping layer and one of the outer layers, the other barrier layers being arranged between the damping layer and the other outer layer,
the barrier layers being configured to block a diffusion of the plasticizer.

In further optional aspects of the invention:
- at least one of the barrier layers is formed by a third material having a diffusion coefficient of the plasticizer in the material, at 25°C, strictly less than 1.10⁻¹⁵ cm²/s, preferably less than 5.10⁻¹⁶cm²/s,
- at least one of the barrier layers is formed by a third material having a diffusion coefficient of the plasticizer in the material, at 130°C, strictly less than 1.10⁻¹⁰) cm²/s, preferably less than 3.1⁻¹¹ cm²/s,
- the second material has a mass fraction of the acrylic polymer(s) comprised between 0.21 and 0.62, in particular between comprised 0.21 and 0.51, and preferably between comprised 0.21 and 0.35,
- the second material has a mass fraction of the tackifier(s) comprised between 0.17 and 0.60, notably comprised between 0.22 and 0.35, and preferably comprised between 0.22 and 0.26,
- the second material has a mass fraction of plasticizer(s) comprised between 0.12 and 0.31, and preferably between 0.16 and 0.26,
- the second material has a glass transition temperature comprised between - 30°C and 10°C and preferably between -20°C and 0°C,
- the third material is selected from polyethylene terephthalate (PET), an ethylene-vinyl alcohol copolymer and a ionomer of poly(ethylene-co-acrylic acid),
- the thickness of said barrier layer is greater than 3 microns, notably between 3 microns and 100 microns,
- the third material is formed by an ethylene-vinyl alcohol copolymer, and the ethylene-vinyl alcohol molar fraction in the ethylene-vinyl alcohol copolymer is between 0.28 and 0.36,
- the third material is formed by polyvinyl butyral (PVB) or poly(ethylene-vinyl acetate) (EVA), the polyvinyl butyral (PVB) or poly(ethylene-vinyl acetate) (EVA) forming the barrier layer having a degree of crosslinking strictly higher than the degree of crosslinking of the polyvinyl butyral (PVB) or poly(ethylene-vinyl acetate) (EVA) of the outer layers,
- the barrier layer comprises an agent suitable for crosslinking polyvinyl butyral (PVB) or poly(ethylene-vinyl acetate) (EVA),
- the acrylic polymer(s) are formed from monomers selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, nonyl acrylate, nonyl methacrylate, isononyl acrylate, isononyl acrylate, isononyl methacrylate, isobornyl methacrylate, decyl acrylate, decyl methacrylate, dodecyl acrylate, dodecyl methacrylate, tridecyl acrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, hydroxyethyl methacrylate, 2-hydroxypropyl acrylate, 2-hydroxypropyl methacrylate, acrylic acid, styrene and acrylonitrile,
- the damping layer has a thickness comprised between 5 microns and 500 microns, notably between 30 microns and 100 microns.

Another aspect of the present invention is a laminated glazed assembly for a vehicle, comprising a first sheet of glass and a second sheet of glass superimposed to the first sheet of glass, the laminated glazed assembly also comprising an interlayer according to an embodiment of the invention, the interlayer being arranged between the first sheet of glass and the second sheet of glass.

Another aspect of the present invention is a process for manufacturing an interlayer according to an embodiment of the invention, the process comprising:
a) a step of depositing a liquid composition on a barrier layer configured to block the diffusion of a plasticizer, the liquid composition comprising a latex comprising an aqueous colloidal dispersion of at least one acrylic polymer, a tackifier and a plasticizer, and
b) a drying step of the liquid composition on the barrier layer, so as to form a viscoelastic damping layer.

### Brief description of the drawings

Other features, purposes and advantages of the invention will emerge from the following description, which is purely illustrative and not exhaustive, and which must be read in view of the accompanying drawings on which:
[Fig.1] - figure 1 diagrammatically shows an interlayer according to a possible embodiment of the invention,
[Fig.2] - figure 2 diagrammatically shows a glazed assembly according to a possible embodiment of the invention,
[Fig.3] - figure 3 diagrammatically shows a process for manufacturing an interlayer according to a possible embodiment of the invention,
[Fig.4] - figure 4 illustrates loss factors as a function of temperature for different interlayers including interlayers according to a possible embodiment of the invention,
[Fig.5] - figure 5 illustrates storage modulus as a function of temperature for different interlayers including interlayers according to a possible embodiment of the invention.

### Definitions

The term "*latex*" is used herein to designate an aqueous colloidal dispersion of polymers, a tackifier and a plasticizer.

The terms "*dry matter*" of a composition is used herein to designate the components of the composition obtained when water is removed from the composition.

The term *"loss factor **η***" of a material having a complex Young's modulus, is used herein to designate the ratio of the imaginary part E" of the Young's modulus of the material to the real part E' of the Young's modulus of the material. The loss factor **η** of a material is defined by the international standard ISO 18437-2:2005 (Mechanical vibration and shock - Characterization of the dynamic mechanical properties of visco-elastic materials - Part 2: Resonance method, part 3.2). Notably, the loss factor can be defined for a predetermined frequency. As used herein, it is understood that "a *material has a first loss factor **η** greater than a value*" means that the material has a first loss factor **η** greater than the value for at least one frequency selected from the audible frequency range, i.e., a frequency range between 20 Hz inclusive and 20 kHz inclusive, and preferably between 20 Hz inclusive and 10 kHz inclusive, at 20°C.

The terms "*A value of the real part E' of the Young's modulus of a material is greater than a value*" is used herein to designate that the real part E' of the Young's modulus of the material is greater than the value of the real part E' of the Young's modulus of the material for at least one frequency selected from the range of audible frequencies, i.e., from a range of frequencies between and including 20 Hz to and including 20 kHz, and preferably from and including 20 Hz to and including 10 kHz, at 20°C.

The real part E' and the imaginary part E" of the Young's modulus can be defined for a predetermined temperature. It is understood herein that "the *real part E' of the Young's modulus of a material is greater than a value*" means that the material has a real part E' of the Young's modulus greater than the value at 20°C. As used herein, "a material has a first loss factor **η** greater than a value" is understood to mean that the material has a first loss factor **η** greater than the value at 20°C.

A storage modulus G can be related, in particular for an isotropic material, to the Young's modulus E by the relation G=E/2(1+**v**), where v is the Poisson coefficient of the material.

A dynamic characterization of a material can be performed on a viscoanalyzer of the Metravib viscoanalyzer type, under the following measurement conditions. A sinusoidal stress is applied to the material. A measurement sample formed by the material to be measured consists of two rectangular parallelepipeds, each parallelepiped having a thickness of 3.31 mm, a width of 10.38 mm and a height of 6.44 mm. Each parallelepiped formed by the material is also referred to as a shear specimen. The excitation is implemented with a dynamic amplitude of 5 µm around the rest position, running through the frequency range between 1 Hz and 700 Hz, and through a temperature range between -90°C and +60°C.

The viscoanalyzer makes it possible to subject each specimen to deformations under precise conditions of temperature and frequency, and to measure the displacements of the specimen, the forces applied to the specimen and their phase shift, which makes it possible to measure rheological quantities characterizing the specimen material.

In particular, the evaluation of the measurements makes it possible to calculate the Young's modulus E of the material, and particularly the real part E' of the Young's modulus and the imaginary part E" of the Young's modulus of the material, and thus to calculate the tangent of the loss angle (or loss factor) **η** (also designated tan**δ**).

A value of the real part E' of the Young's modulus and/or a loss factor **η** of a material are measured without the material being prestressed.

A glass transition temperature *T_{g}* of a material, preferably of the material of the damping layer, can be measured by differential scanning calorimetry (DSC) analysis. The glass transition temperature can be determined using the midpoint method as described in the standard ASTM-D-3418 for differential scanning calorimetry. The measurement device used by the applicant is the TA Instruments Discovery DSC model.

Preferably, a glass transition temperature T_{g} is determined by dynamic mechanical analysis (DMA). The value of T_{g} is determined by plotting an isofrequency curve of loss factor versus material temperature. The temperature at which the loss factor value is maximum is equal to the glass transition temperature T_{g}. The glass transition temperature depends on the excitation frequency of the material. The term "glass transition temperature" is used here to mean the glass transition temperature measured at a frequency of 1 Hz by DMA.

The terms "*mass fraction*" of a first element in a second element is defined as the ratio of the mass of the first element to the mass of the second element.

### Detailed description of the invention

### General description the interlayer 1

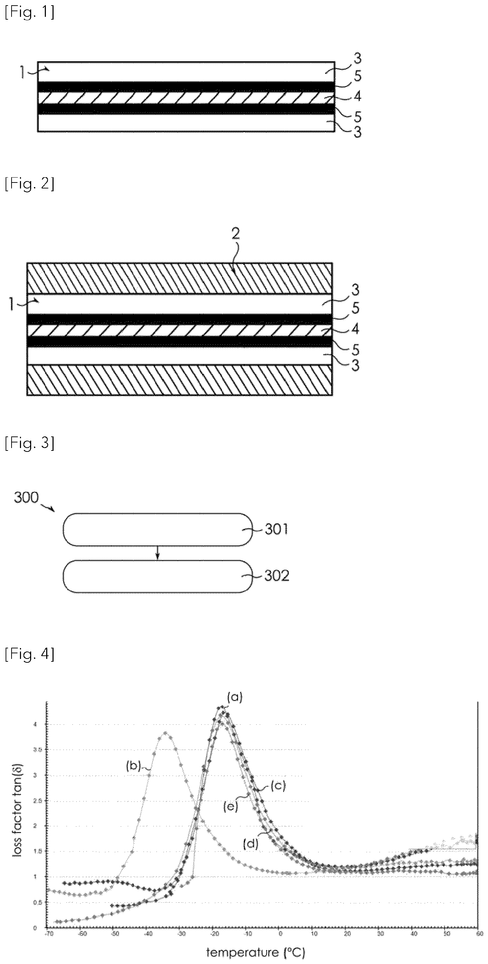

In reference to figure 1 and figure 2, an interlayer 1 is adapted for a laminated glazed assembly 2. The interlayer 1 comprises at least two outer layers 3. Each outer layer 3 is formed by a first material chosen between polyvinyl butyral (PVB) and poly (ethylene-vinyl acetate) (EVA). The outer layers 3 can have a plasticizer mass fraction greater than 0.15, notably greater than 0.20 and preferably greater than 0.26 and more preferably greater than 0.43. Notably, the outer layers 3 can be formed by standard polyvinyl butyral (PVB), having a plasticizer mass fraction comprised between 0.26 and 0.28. The polyvinyl butyral (PVB) can have a hydroxyl group content comprised between 0.18 and 0.20.

The interlayer 1 comprises a viscoelastic damping layer 4 arranged between the two outer layers 3. The damping layer 4 is formed by a second material comprising at least one acrylic polymer, at least one tackifier, and at least one plasticizer. The mass fraction of the plasticizer(s), i.e. the total mass fraction of the plasticizer(s), in first material is strictly superior to the mass fraction of the plasticizer(s) in the second material. The damping layer 4 may have a thickness comprised between 5 microns and 500 microns, notably between 30 microns and 100 microns.

The interlayer 1 comprises two barrier layers 5. One of the barrier layers 5 is arranged between the damping layer 4 and one of the outer layers 3. The other barrier layer 5 is arranged between the damping layer 4 and the other outer layer 3. The barrier layers 5 are configured to block a diffusion of the plasticizer, notably from the damping layer 4 towards the outer layers 3.

Thus, the interlayer 1 allows the laminated glazed assembly 2 to be manufactured in a simpler manner compared to the manufacture of a known glazed assembly, for example a glazed assembly comprising an interlayer made of acoustic PVB, while at the same time providing superior acoustic isolation properties and stability to aging. Indeed, the inventors discovered that it was possible to manufacture an interlayer 1 providing acoustic insulation properties superior to those of a known interlayer from the composition of the interlayer 1 defined above, while reducing the aging of this interlayer by preventing the migration of plasticizer between the different layers of the interlayer 1.

### Acrylic polymer(s)

The acrylic polymer(s) may be formed from monomers selected from the group consisting of methyl acrylate, methyl methacrylate, ethyl acrylate ethyl methacrylate, propyl acrylate, propyl methacrylate, isopropyl acrylate, isopropyl methacrylate, butyl acrylate, butyl methacrylate, isobutyl acrylate isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, isooctyl methacrylate, nonyl acrylate, nonyl methacrylate, isononyl acrylate, isobornyl methacrylate, decyl acrylate decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, hydroxyethyl methacrylate, 2-hydroxypropyl acrylate, 2-hydroxypropyl methacrylate, acrylic acid, styrene and acrylonitrile.

The acrylic polymer(s) may be copolymers, formed from at least two monomers selected from the group formed by the monomers previously defined.

The damping layer 4 may comprise two different acrylic polymers. One of the two polymers may be 2-ethylhexyl acrylate (2-EHA) and/or butylacrylate (BA). Preferably, one of the two polymers is 2-ethylhexyl acrylate (2-EHA) and the other of the two polymers is butylacrylate (BA). The weight ratio of 2-ethylhexyl acrylate (2-EHA) to butylacrylate (BA) can be between 2 and 4 and is preferably 3.

The damping layer 4 may be made from a latex. For example, Arkema ^{®} Encor 4028, Arkema ^{®} Encor 4517, Alberdingk^{®} AC 75070, or Alberdingk^{®} AC 75011 latex may be used.

The damping layer 4 may comprise another polymer that is not an acrylic polymer. Such other polymer may be formed from at least one monomer selected from styrene and methyl methacrylate.

The second material may comprise a first acrylic polymer having a first glass transition temperature T_{g1}, and a second polymer, acrylic or non-acrylic, having a second glass transition temperature T_{g2}, higher than T_{g1}. The difference between the second glass transition temperature T_{g2} and the first glass transition temperature T_{g1} is preferably greater than 10°C, and preferably greater than 20°C. Thus, it is possible to increase the glass transition temperature of the second material with respect to the glass transition temperature of a material obtained only with the first acrylic polymer. Indeed, the glass transition temperature obtained only with the first acrylic polymer may be too small to present a maximum damping of the material in an audible frequency range. The glass transition temperature of the second material is comprised between -30°C and 10°C, and notably comprised between -20°C and 0°C. Hence, it is possible to obtain a peak of the loss factor of the second material in audible frequencies.

### Tackifier

The tackifier is adapted to enable bonding of the outer layers 3 *via* the damping layer 4. The tackifier may comprise a hydrogenated resin, and preferably a hydrogenated rosin resin. The hydrogenated resin may comprise a wood resin glyceryl ester, preferably abietic acid. The hydrogenated resin may comprise a hydrogenated rosin ester (e.g., an Arakawa ^{®} KE-311 or KE 100 brand resin).

### Plasticizer

The plasticizer is adapted to increase the plastic properties of the damping layer 4. The plasticizer may comprise at least one member selected from a citrate, an adipate, a glycol, and a triethylene glycol derivative. The citrate may be acetyl-tributyl citrate. The adipate may be triethylene glycol bis(2-ethylhexanoate) (for example, marketed as WVC 3800 from Celanese ^{®}).

### Adjustment of the acoustic properties of the laminated glazed assembly 2

A mass fraction of the acrylic polymer(s) in the second material may be comprised between 0.21 and 0.62, notably between 0.21 and 0.51, and preferably between 0.21 and 0.35. Thus, the material forming the viscoelastic damping layer 4 has a loss factor tan**δ** greater than 1. The damping layer 4 may be made from a latex having a mass fraction of the acrylic polymer(s) in the latex is between 0.20 and 0.60, particularly between 0.20 and 0.50, and preferably between 0.20 and 0.30.

Known materials for sound attenuation comprising an acrylic polymer have a frequency fₚ for which a value of the loss factor tan**δ** of the viscoelastic damping layer material 4 is maximum above 50 kHz. This frequency is not included in the audible frequency spectrum, which decreases the sound attenuation properties of the glazing element 1. To that end, a mass fraction of the plasticizer(s) in the second material is comprised between 0.07 and 0.43, in particular between 0.12 and 0.31, and preferably between 0.16 and 0.26. Thus, the frequency fₚ for which the value of the loss factor tan**δ** of the viscoelastic damping layer material 4 is maximum is within the audible frequency spectrum while increasing the value of the loss factor tanδ with respect to known materials. The damping layer 4 may be made from a latex having a mass fraction of the plastizer comprised between 0.05 and 0.25, particularly between 0.07 and 0.18, and preferably between 0.09 and 0.15.

Indeed, the inventors have discovered that, for a predetermined mass fraction of acrylic polymer(s), the frequency fₚ for which the loss factor is maximum varies in the same way as the mass fraction of the plasticizer in the damping layer 4. Thus, the inventors have discovered the range of mass fraction of the plasticizer in the second material for which the frequency fₚ is within the audible frequency spectrum.

A mass fraction of the tackifier(s) in the second material may be comprised between 0.17 and 0.60, notably comprised between 0.22 to 0.35, and preferably comprised between 0.22 to 0.26. Thus, the frequency fₚ for which the value of the loss factor tan**δ** of the damping layer 4 is maximum is within the audible frequency spectrum. The damping layer 4 may be made from a latex having a mass fraction of the tackifier(s) comprised between 0.20 and 0.70, particularly between 0.25 and 0.40, and preferably between 0.25 and 0.30.

Indeed, the inventors have discovered that, for a predetermined acrylic polymer(s) concentration, the frequency fₚ for which the loss factor is maximum varies in the opposite way to the mass fraction of the tackifier in the second material. Thus, the inventors have discovered the range of mass fraction of tackifier in the second material for which the frequency fₚ is within the audible frequency spectrum. Furthermore, the value of the loss factor tan**δ** of the second material is not very dependent on the mass fraction of the tackifier in the second material.

### Barrier layers 5

With reference to figure 1 and figure 2, the interlayer 1 comprises at least two barrier layers 5 configured to block a diffusion of the plasticizer, notably from the outer layers 3 towards the damping layer 4. Thus, it is possible to avoid enrichment of the damping layer 4 with plasticizer during the manufacture of the glazed assembly 2 and/or during aging of the glazed assembly 2. Indeed, the enrichment of the damping layer 4 with plasticizer leads to a decrease in the glass transition temperature of the second material and thus to a decrease in the loss factor of the second material at a temperature of use, for example at 25°C.

At least one of the barrier layers 5 may be formed by a third material having a diffusion coefficient of the plasticizer in the third material strictly at 25°C, strictly less than 1.10⁻¹⁵ cm²/s, preferably less than 5.10⁻¹⁶ cm²/s. Thus, it is possible to prevent an enrichment of the damping layer 4 in plasticizer during the aging of the glazed assembly 2.

At least one of the barrier layers 5 may be formed by a third material having a diffusion coefficient of the plasticizer in the third material strictly, at 130°C, strictly less than 1.10⁻¹⁰ cm²/s, preferably less than 3.10⁻¹¹ cm²/s, Thus, it is possible to prevent an enrichment of the damping layer 4 in plasticizer during the manufacture of the glazed assembly 2 and particularly during the lamination step.

The thickness of one of the barrier layers 5 can be greaterthan 3 microns, notably between 3 microns and 100 microns and preferably between 5 microns and 20 microns.

The third material can be selected from polyethylene terephthalate (PET), an ethylene-vinyl alcohol copolymer and a ionomer of poly(ethylene-co-acrylic acid).

The third material can be formed by an ethylene-vinyl alcohol copolymer, and the ethylene-vinyl alcohol molar fraction in the ethylene-vinyl alcohol copolymer can be comprised between 0.24 and 0.48, notably between 0.28 and 0.36. These molar fraction ranges were measured to reduce plasticizer diffusion through a barrier layer 5. For example, the ethylene-vinyl alcohol copolymer "EVAL E-105B", "EVAL EF-F", or "EVAL EF-XL" from the company Kuraray can be used. The ethylene-vinyl alcohol copolymer ""EVAL EF-F" is preferred.

The third material can be formed by polyvinyl butyral (PVB) or poly(ethylene-vinyl acetate) (EVA), the polyvinyl butyral (PVB) or poly(ethylene-vinyl acetate) (EVA) forming the barrier layer (5) having a degree of crosslinking strictly higher than the degree of crosslinking of the polyvinyl butyral (PVB) or poly(ethylene-vinyl acetate) (EVA) of the outer layers 3. Preferably, the barrier layer 5 can comprise an agent suitable for crosslinking polyvinyl butyral (PVB) or poly(ethylene-vinyl acetate) (EVA). For example, a zinc crosslinker (Zinplex 15 from Münzing) can be used. The crosslinker can be coated directly on the outer layers 3 to fabricate the barrier layers 5, before putting the barrier layers 5 in contact with the latex.

The third material can be formed by a coating material adapted to prevent moisture and/or oil diffusion. The third material can be a siloxane. Silfort PHC587C and Silfort PHC XH100 siloxanes from the company Momentive can be used. The third material can be an acrylic acid coating (Joncryl 50 / Joncryl 60 from BASF) combined with a zinc crosslinker (Zinplex 15 from Münzing).

The third material can be a ionomer of poly(ethylene-co-acrylic acid). For example, the third material can be a ionomer of poly(ethylene-co-acrylic acid + Zn++), physically cross-linked by zinc. The ionomer Surlyn from the company Dupont can be used.

### Fabrication process of the interlayer 1

In reference to figure 3, another aspect of the invention is a process 300 for manufacturing an interlayer 1 according to an embodiment of the invention. The process 300 comprises a step 301 of depositing a liquid composition on a barrier layer 5 configured to block the diffusion of a plasticizer. The liquid composition comprises a latex, the latex comprising an aqueous colloidal dispersion of at least one acrylic polymer, a tackifier and a plasticizer. The process 300 further comprises a drying step 302 of the liquid composition on the barrier layer 5, so as to form a viscoelastic damping layer 4. The process may comprise a subsequent step of superimposing the other barrier layer 5 on the damping layer 4 and then laminating the assembly formed by the damping layer 4 surrounded by the two barrier layers 5. The lamination can be carried out between two rolls. For example, it can be a lamination between a steel roll and a rubber roll. As the viscoelastic damping layer 4 is tacky, it adheres to the other barrier layer 5 with light lamination pressure in the nip. Alternatively, lamination can be carried out by heat lamination.

### Examples

The curve (a) in figure 4 shows the variation of the loss factor as a function of temperature for an interlayer consisting in a damping layer 4 without outer layers 3. The damping layer 4 is made from a latex comprising 2-Ethylhexyl acrylate (EHA), butyl acrylate (BA), methyl methacrylate (MMA) and acrylic acid (AA) in respective proportions of 69/23/7/1 related to the total amount of acrylic monomers. The molar fraction of plasticizer is equal to 0.18. rosin ester tackifier was used, to have a respective mass fraction of 40/40/20 of monomer, tackifier and plasticizer in the dry matter of the latex. The curve (b) in figure 4 shows the variation of the loss factor as a function of temperature for an interlayer different from the invention comprising the same damping layer 4 and outer layers 3 made of PVB after an ageing process. The ageing process consists of heating of the sample at 140°C for 2 minutes. The curve (c) in figure 4 shows the variation of the loss factor as a function of temperature for an interlayer 1 according to an embodiment of the invention comprising the same damping layer 4, outer layers 3 made of PVB and barrier layers 5 made of PET, after the ageing process. The curve (d) in figure 4 shows the variation of the loss factor as a function of temperature for an interlayer 1 according to an embodiment of the invention comprising the same damping layer 4, outer layers 3 made of PVB and barrier layers 5 made of Surlyn ionomer of poly(ethylene-co-acrylic acid), after the ageing process. The curve (e) in figure 4 shows the variation of the loss factor as a function of temperature for an interlayer 1 according to an embodiment of the invention comprising the same damping layer 4, outer layers 3 made of PVB and barrier layers 5 made of EVAL- ethylene-vinyl alcohol copolymer, after the ageing process.

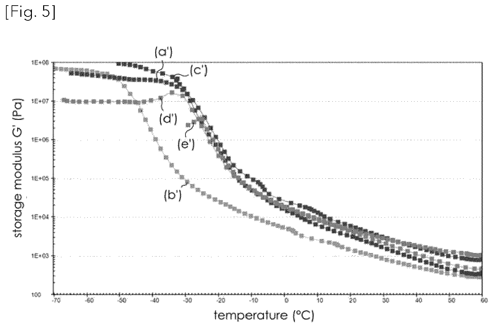

The curve (a') in figure 5 shows the variation of the storage modulus as a function of temperature for an interlayer consisting in a damping layer 4 without outer layers 3. The damping layer 4 is made from a latex comprising 2-Ethylhexyl acrylate (EHA), butyl acrylate (BA), methyl methacrylate (MMA) and acrylic acid (AA) in respective proportions of 69/23/7/1 related to the total amount of acrylic monomers. The molar fraction of plasticizer is equal to 0.18. rosin ester tackifier was used, to have a respective mass fraction of 40/40/20 of monomer, tackifier and plasticizer in the dry matter of the latex. The curve (b') in figure 5 shows the variation of the storage modulus G' as a function of temperature for an interlayer different from the invention comprising the same damping layer 4 and outer layers 3 made of PVB after an ageing process. The ageing process consists of heating of the sample at 140°C for 2 minutes. The curve (c') in figure 5 shows the variation of the storage modulus G' as a function of temperature for an interlayer 1 according to an embodiment of the invention comprising the same damping layer 4, outer layers 3 made of PVB and barrier layers 5 made of PET, after the ageing process. The curve (d') in figure 5 shows the variation of the storage modulus G' as a function of temperature for an interlayer 1 according to an embodiment of the invention comprising the same damping layer 4, outer layers 3 made of PVB and barrier layers 5 made of Surlyn ionomer of poly(ethylene-co-acrylic acid), after the ageing process. The curve (e') in figure 5 shows the variation of the storage modulus G' as a function of temperature for an interlayer 1 according to an embodiment of the invention comprising the same damping layer 4, outer layers 3 made of PVB and barrier layers 5 made of EVAL- ethylene-vinyl alcohol copolymer, after the ageing process.

## Claims

1. An interlayer (1) for a laminated glazed assembly (2), the interlayer (1) comprising two outer layers (3) formed by a first material chosen between polyvinyl butyral (PVB) and poly (ethylene-vinyl acetate) (EVA), the interlayer (1) also comprising a viscoelastic damping layer (4) arranged between the two outer layers (3), the damping layer (4) being formed by a second material comprising:
- at least one acrylic polymer,
- at least one tackifier, and
- at least one plasticizer, the plasticizer(s) having a mass fraction(s) in the damping layer (4) comprised between 0.07 and 0.43,
the mass fraction of the plasticizer(s) in first material being strictly superior to the mass fraction of the plasticizer(s) in the second material,
the interlayer (1) comprising two barrier layers (5), one of the barrier layers (5) being arranged between the damping layer (4) and one of the outer layers (3),
the other barrier layers (5) being arranged between the damping layer (4) and
the other outer layer (3),
the barrier layers (5) being configured to block a diffusion of the plasticizer.

2. The interlayer according to claim 1, wherein one of the barrier layers (5) is formed by a third material having a diffusion coefficient of the plasticizer in the material, at 25°C, strictly less than 1.10⁻¹⁶ cm²/s.

3. The interlayer according to claim 1 or 2, wherein one of the barrier layers (5) is formed by a third material having a diffusion coefficient of the plasticizer in the material, at 130°C, strictly less than 1.10⁻¹⁰) cm²/s.

4. The interlayer (1) according to any one of claims 1 to 3, wherein the second material has a mass fraction of the acrylic polymer(s) comprised between 0.21 and 0.62.

5. The interlayer (1) according to any one of claims 1 to 4, wherein the second material has a mass fraction of the tackifier(s) comprised between 0.17 and 0.60.

6. The interlayer (1) according to any one of claims 1 to 5, wherein the second material has a mass fraction of plasticizer(s) comprised between 0.12 and 0.31, and preferably between 0.16 and 0.26.

7. The interlayer (1) according to any one of claims 1 to 6, wherein the second material has a glass transition temperature comprised between - 30°C and 10°C.

8. The interlayer (1) according to any one of claims 1 to 7, wherein the third material is selected from polyethylene terephthalate (PET), an ethylene-vinyl alcohol copolymer and a ionomer of poly(ethylene-co-acrylic acid).

9. The interlayer (1) according to any one of claims 1 to 8, wherein the thickness of said barrier layer (5) is greater than 3 microns, notably between 3 microns and 100 microns.

10. The interlayer (1) according to any one of claims 1 to 9, wherein the third material is formed by an ethylene-vinyl alcohol copolymer, and wherein the ethylene-vinyl alcohol molar fraction in the ethylene-vinyl alcohol copolymer is between 0.28 and 0.36.

11. The interlayer (1) according to any one of claims 1 to 10, wherein the third material is formed by polyvinyl butyral (PVB) or poly(ethylene-vinyl acetate) (EVA), the polyvinyl butyral (PVB) or poly(ethylene-vinyl acetate) (EVA) forming the barrier layer (5) having a degree of crosslinking strictly higher than the degree of crosslinking of the polyvinyl butyral (PVB) or poly(ethylene-vinyl acetate) (EVA) of the outer layers (3).

12. The interlayer (1) according to claim 11, wherein the barrier layer (5) comprises an agent suitable for crosslinking polyvinyl butyral (PVB) or poly(ethylene-vinyl acetate) (EVA).

13. The interlayer (1) according to any one of claims 1 to 12, wherein the acrylic polymer(s) are formed from monomers selected from the group consisting of methyl acrylate, methyl methacrylate, ethyl acrylate, ethyl methacrylate, propyl acrylate, propyl methacrylate, isopropyl acrylate, isopropyl methacrylate, butyl acrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctyl acrylate, nonyl acrylate, nonyl methacrylate, isononyl acrylate, isononyl acrylate, isononyl methacrylate, isobornyl methacrylate, decyl acrylate, decyl methacrylate, dodecyl acrylate, dodecyl methacrylate, tridecyl acrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, hydroxyethyl methacrylate, 2-hydroxypropyl acrylate, 2-hydroxypropyl methacrylate, acrylic acid, styrene and acrylonitrile.

14. The interlayer (1) according to any one of claims 1 to 13, wherein the damping layer (4) has a thickness comprised between 5 microns and 500 microns, notably between 30 microns and 100 microns.

15. A laminated glazed assembly (2) for a vehicle, comprising a first sheet of glass (6) and a second sheet of glass (6) superimposed to the first sheet of glass (6), the laminated glazed assembly (2) also comprising an interlayer (1) according to any one of claims 1 to 14, the interlayer (1) being arranged between the first sheet of glass (6) and the second sheet of glass (6).

16. Process (300) for manufacturing an interlayer (1) according to any one of claims 1 to 14, the process (300) comprising:
a) a step of depositing a liquid composition on a barrier layer (5) configured to block the diffusion of a plasticizer, the liquid composition comprising a latex comprising an aqueous colloidal dispersion of at least one acrylic polymer, a tackifier and a plasticizer, and
b) a drying step of the liquid composition on the barrier layer (5), so as to form a viscoelastic damping layer (4).
